# EUROPEAN PATENT SPECIFICATION

(11) **EP 2 601 274 B1**
(45) Date of publication and mention of the grant of the patent: **17.07.2019**
(21) Application number: 11815310.5
(22) Date of filing: 04.08.2011
(51) Int. Cl.: A47G 1/17

(54) **ADHESIVELY MOUNTED ARTICLE SUPPORT ASSEMBLY WITH EXPOSED PULL TAB**
HAFTMONTIERTE ARTIKELTRÄGERANORDNUNG MIT HERVORSTEHENDER ZUGLASCHE
ENSEMBLE SUPPORT D'ARTICLE MONTÉ PAR ADHÉRENCE POURVU D'UNE TIRETTE EXPOSÉE

(30) Priority: 04.08.2010 US 849990
(43) Date of publication of application: 12.06.2013
(73) Proprietor: 3M Innovative Properties Company, St. Paul, MN 55133-3427 (US)
(72) Inventor: MCGREEVY, Sean C., Saint Paul, Minnesota 55133-3427 (US); THOMPSON, Craig D., Saint Paul, Minnesota 55133-3427 (US); QIBLAWI, Jameel R., Saint Paul, Minnesota 55133-3427 (US); FU, Tzu Chen, Taoyuan Country Taiwan 32669 (TW); HO, Hsin-Kun, New Taipei City 221 (TW)
(74) Representative: Michalík, Andrej
(86) International application number: PCT/US2011/046553
(87) International publication number: WO 2012/018987

(56) References cited:
- DE-A1- 19 955 177
- US-A- 5 516 581
- US-A- 5 925 459
- US-A1- 2003 187 956
- US-A1- 2004 230 820
- US-A1- 2004 236 962
- US-A1- 2009 217 354

## Description

### Background

The present invention relates generally to adhesively mounted article support assemblies, and more particularly, using stretch releasing adhesives having a non-adhesive pull tab.

Stretch releasing adhesives are high performance pressure-sensitive adhesives that combine strong holding power with clean removal and no surface damage. Stretch releasing adhesives are commonly provided in the form of strips that include an adhesive portion and a non-adhesive pull tab portion that is grasped and pulled by a user during the stretch removal process.

Stretch releasing adhesive strips are commonly used to removably adhesively mount a holding device, such as a hook, on a surface, such as a wall, window, cabinet, or the like. Such devices are generally designed to either conceal the non-adhesive pull tab or leave it exposed. Devices that leave the pull tab exposed allow a user to directly grasp the pull tab to stretch remove the adhesive strip from the holding device and the surface. Leaving the pull tab exposed, however, is often considered aesthetically undesirable. Examples of article support assemblies that leave the non-adhesive pull tab exposed are described in U.S. Patent 5,409,189 (Luhmann), and U.S. Patent 5,989,708 (Kreckel), and DE 199 55 177 A1 which is considered to disclose the prior art nearest to the present invention.

To conceal the pull tab, and thereby improve the overall visual appearance of devices mounted using stretch releasing adhesive strips, devices have been designed to completely overlay, and thereby conceal, the pull tab, and selectively allow access to the pull tab during the stretch removal process. Examples of holding devices that allow the non-adhesive pull tab to be selectively concealed are described in U.S. Patent 5,507,464 (Hamerski et al.), U.S. Patent 5,967,474 (doCanto et al.), U.S. Patent 6,082,686 (Schumann), U.S. Patent 6,131,864 (Schumann), U.S. Patent 6,811,126 (Johansson, et al.), and U.S. Patent 7,028,958 (Pitzen, et al.). Devices designed to conceal the pull tab, however, often include multiple parts that may be misplaced or damaged. In addition, the number of parts adds to the cost to produce the devices, and increases the complexity of using the devices. For example, end users who are not familiar with the operation of such devices may not recognize that the device is designed to selectively expose the pull tab.

### Summary

There remains a need for a stretch releasing adhesive article support assembly that is aesthically pleasing, is inexpensive to produce, easy to use, and allows users to readily access the non-adhesive pull tab during the stretch removal process.

The present invention provides an article support assembly according to independent claims 1, 5, and 6. Preferred features of the invention are set out in the dependent claims.

In one embodiment, the cutout region may be concave. In another embodiment, the cutout region may be provided in the shape of a parallelogram.

In addition, the pull tab remains exposed but is visually inconspicuous.

In any of the embodiments described herein, the article support member and the pull tab may have the same surface finish or texture, such as a matte finish, to give the article support member and pull tab the same general appearance and thereby allow the appearance of the article support member and pull tab to blend together.

Advantages of the invention include that it allows the non-adhesive pull tab to remain exposed so it can be readily accessed by a user, that it has a visually pleasing appearance in which the exposed pull tab blends in with the overall appearance of the article support member, and that the article support member has a unitary or one-piece construction that is easy and inexpensive to make and provides an intuitive design that is easy to use.

### Brief Description of the Drawings

The present invention will be further described with reference to the accompanying drawings, in which:
FIG. 1 is a perspective view of an article support assembly according to the invention.
FIG. 2 is an exploded perspective view of the article support assembly of FIG. 1.
FIG. 3 is an exploded plan view of the article support assembly of FIG. 1.
FIG. 4 is plan view of the article support assembly of FIG. 1.
FIG. 5 is a plan view of a second embodiment of the invention.
FIG. 6 is an exploded perspective view of the article support assembly of FIG. 5.
FIG. 7 is a plan view of a third embodiment of the invention.
FIG. 8 is an exploded perspective view of the article support assembly of FIG. 7.
FIG. 10 is a plan view of a fourth embodiment of the invention.
FIG. 11 is an exploded perspective view of the article support assembly of FIG. 10.
FIG. 12 is a plan view of a fifth embodiment of the invention.
FIG. 13 is an exploded perspective view of the article support assembly of FIG. 12.

### Detailed Description

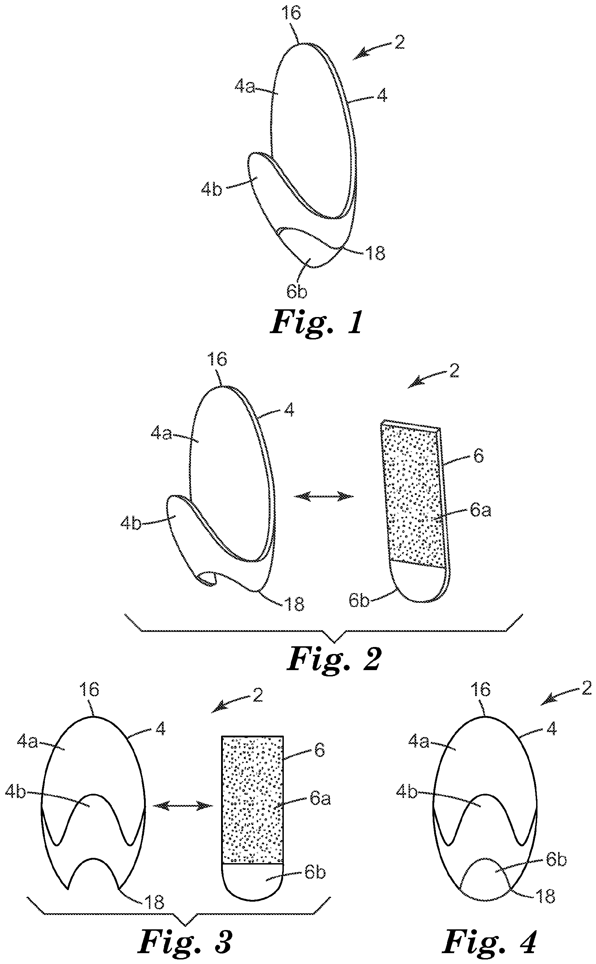

Throughout the description and the accompanying figures functionally similar features are referred to with like reference numerals incremented by 100. Referring to the drawings, FIGs. 1-4 show an article support assembly 2 including a unitary (i.e. one-piece) article support member 4 and a stretch releasable adhesive strip 6 that serves to removably adhesively bond the article support member 4 to a substrate, such as a vertical wall surface, window, or cabinet (not shown). The unitary article support member 4 includes a back plate portion 4a and an article support portion 4b. The adhesive strip 6 includes an adhesive portion 6a and a non-adhesive pull tab portion 6b.

The stretch releasable adhesive strip 6 may be any conventionally known stretch releasable adhesive including a pressure sensitive adhesive tape having an elastic backing, a pressure sensitive adhesive tape with a highly extensible and substantially inelastic backing, or a solid, elastic pressure sensitive adhesive. Specific stretch releasable adhesive strips suitable for use in the various embodiments of the present invention include the pressure sensitive adhesives with elastic backings described in U.S. Pat. No. 4,024,312 (Korpman), the pressure sensitive adhesives with highly extensible and substantially inelastic backings described in U.S. Pat. No. 5,516,581 (Kreckel et al.) and Bries et al. (6,231,962), and the solid, elastic pressure sensitive adhesive described in German Patent No. 33 31 016.

Suitable stretch releasable adhesive strips include the double-sided stretch releasable adhesive strips available from 3M Company, St. Paul, MN under the COMMAND trade designation. Commercially available COMMAND adhesive strips are currently manufactured as discrete strips with one end of the strip including a non-adhesive pull tab to facilitate stretching of the strip during the stretch removal process.

When the article support member 4 is mounted to a surface using the adhesive strip 6, the back plate portion 4a of the article support member 4 is arranged over at least a portion of the adhesive portion 6a of the stretch releasable adhesive strip 6, and at least a portion of the non-adhesive pull tab portion 6b of the adhesive strip 6 extends outwardly beyond the periphery of back plate portion 4a. In this manner, the pull tab portion 6b remains exposed and visible when the article support member 4 is mounted to a surface, thereby making the pull tab portion 6b readily accessible to an end user wishing to access the pull tab portion 6b during the stretch removal process, provided no item mounted on the article support member 4, such as a coat or hat, otherwise conceals the pull tab portion 6b.

In the illustrated embodiment, the article support portion 4b is depicted generically as a hook. It will be understood that the representation is considered illustrative of many functionalities that could alternatively be used. Other examples of article support portions include, for example, cup holders, clips, trays, soap dish holders, and toothbrush holders.

In accordance with one aspect of the article support assembly 2, the non-adhesive pull tab portion 6b of the stretch releasable adhesive strip 6, and the back plate portion 4a of the article support member 4 combine to form an article support assembly 2 that appears to have a generally symmetric and continuous curved profile. In the illustrated embodiment, the back plate portion 4a of the article support member 4 is not symmetric, but the pull tab portion 6b of the adhesive strip 6 has a size and shape that works with the asymmetric profile of the back plate portion 4a to form an overall profile that is visually pleasing and similar to what someone viewing the article support member 4 would expect to see. In this manner, the pull tab portion 6b blends in with the appearance of the back plate portion 4a, thereby making the pull tab portion 6b - which is exposed and readily accessible to an end user - less noticeable. The overall result is an article support assembly 2 that includes a simple one-piece article support member 4 that is easy to make, is user friendly because the pull tab is left exposed and is therefore readily accessible to the end user, and is visually pleasing.

Stated another way, the article support member 4 includes an asymmetric back plate portion 4a (shown most clearly in FIG. 3), and the adhesive strip 6 includes a non-adhesive pull tab portion 6b having a size and shape that combines with the asymmetric appearance of the back plate portion 4a to create a back plate member 4 having an overall visual presentation that appears to be symmetric (shown most clearly in FIG. 4). That is, the back plate portion 4a first end 16 has a shape that differs from the shape of the second end 18, and the configuration of the pull tab portion 6b generally matches, or corresponds to, the size and shape of the back plate first end 16, thereby creating an article support assembly 2 that appears to have a symmetric back plate that is visually pleasing, and tends to de-emphasize, or minimize, the appearance of the pull tab 6b.

In the embodiment illustrated in FIGs. 1-4, the profile of the article support member 4 is oval. Other curved geometric configurations, such as circles, are also contemplated. In specific embodiments, the profile of the back plate portion 4a may be tailored to suit the configuration of a pull tab portion 6b having a particular size and shape. In a specific aspect, it may be desirable for the back plate portion 4a and pull tab portion 6b to have adjacent edges that are contiguous and form a smooth continuous curved profile. That is, the adjacent edges of the back plate portion 4a and pull tab portion 6b form a smooth uninterrupted curve.

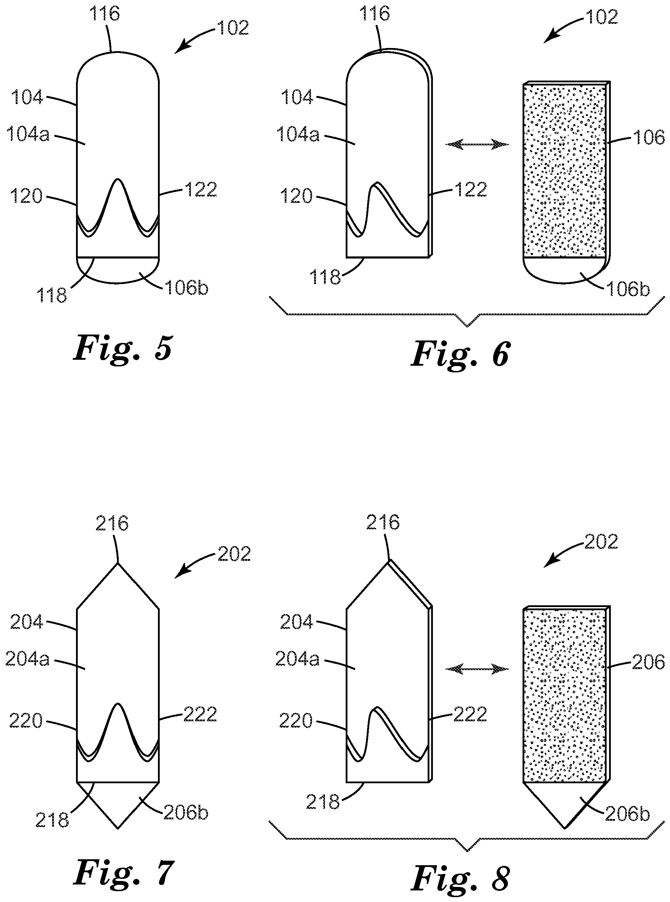

Referring to FIGs. 5 and 6, there is shown an article support assembly 102 consisting of a unitary article support member 104 and a stretch releasable adhesive strip 106. The article support assembly 102 is similar to the article support assembly 2 illustrated in FIGs. 1-4 except the profile of the article support member 104 is different. In the embodiment illustrated in FIGs. 5 and 6, the back plate portion 104a includes an arcuate first end 116, generally parallel side edges 120, 122 that extend away from the arcuate first end 116, and a second end 118 opposite the arcuate first end 116 that is a straight line perpendicular to the parallel side edges 120, 122. The pull tab portion 106b of the stretch releasable adhesive 106 includes an arcuate end that extends outwardly from behind the back plate portion 104a beyond the back plate portion 104a second end 118. To create symmetry, the pull tab portion 106b has a size and shape that generally matches the arcuate first end 116 of the back plate portion 104a.

Referring now to FIGs. 7 and 8, there is shown an article support assembly 202 including a unitary article support member 204 and a stretch releasable adhesive strip 206 similar to the embodiment illustrated in FIGs. 5 and 6 expect the article support member 204 and stretch releasable adhesive 206 have opposed ends that are generally pointed or triangular rather than arcuate. More particularly, the article support member 204 includes a back plate portion 204a having a first end 216 that tapers to a point in the form of a triangle, generally parallel side edges 220, 222, and a straight second end 218. The stretch releasable adhesive 206 includes a pull tab portion 206b having a tapered end in the form of a triangle that extends outwardly from the back plate portion 204a beyond the second end 218 opposite from the triangular first end 216. That is, the base plate first end 216 and pull tab portion 206b have generally matching triangular ends. In this manner, the base plate portion 204a and pull tab portion 206b combine to create an article support assembly 202 that appears to be symmetric and is visually pleasing, which tends to minimize the prominence or appearance of the pull tab portion 206b.

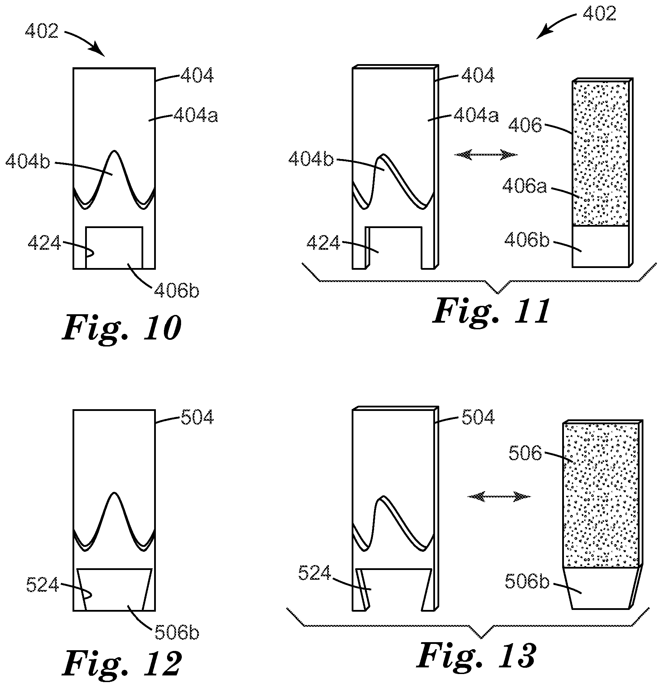

Referring now to FIGs. 10 and 11, there is shown another embodiment of an article support assembly 402 including a stretch releasable adhesive strip 406 having an adhesive portion 406a and a non-adhesive pull tab portion 406b, and a unitary article support member 404 including a back plate portion 404a and an article support 404b. The article support member 404 is arranged over the adhesive portion 406a of the stretch releasable adhesive strip 406.

In accordance with one aspect of the article support assembly 402, the back plate portion 404a of the article support member 404 includes a cutout region 424, which forms a discontinuity in the perimeter of what would otherwise be a rectangular back plate portion 404a, and the stretch releasable adhesive strip 406 includes a pull tab portion 406b that is sized to fill the cutout region 424. Because the adhesive strip 406 is arranged behind the article support member 404, the pull tab portion 406b fills the cutout region 424 by having a size and shape that generally corresponds to the size and shape of the cutout region 424. In the embodiment illustrated in FIGs. 10 and 11, the cutout region 424 is rectangular, and the pull tab portion 406b is rectangular.

As illustrated in FIG. 10, when the article support member 404 is mounted on a surface using the stretch releasable adhesive strip 406, the pull tab portion 406b of the adhesive strip 406 is arranged within the cutout region 424. In this manner, the pull tab portion 406b "fills in" the cutout region 424, and thereby gives the back plate portion 404a a profile that appears complete and generally symmetric, which in the illustrated embodiment is rectangular. This allows the pull tab portion 406b of the adhesive strip 406 to remain exposed and, therefore, readily accessible to end users wishing to grasp and pull the pull tab portion 406b during the stretch removal process, but also serves to make the pull tab portion 406b less conspicuous.

The particular configuration of the cutout region 424 and pull tab portion 406b is not significant to the invention hereof, so long as the pull tab portion 406b fills the cutout region 424, thereby giving the article support member 404 a symmetric appearance and minimizing the presence of the pull tab portion 406b, and also allowing the pull tab portion 406b to remain exposed and readily accessible to an end user wishing to grasp and pull the pull tab portion 406b during the stretch removal process. FIGs. 12 and 13, for example, show an article support member 504 having a generally trapezoidal cutout region 524. In the illustrated embodiment, the adhesive strip 506 is depicted as having a pull tab portion 506b with a trapezoidal shape that generally corresponds to the shape of the cutout region 524, but pull tabs having other shapes, such as a square or rectangle, may also be used to fill the trapezoidal cutout region 524.

An advantage of article support members having a cutout region is that the cut out region allows the use of adhesive strips that are narrower than the width of the associated article support member. That is, in the embodiments illustrated in FIGs. 5-8, in order to achieve the symmetric appearance, the article support member and the adhesive strip will generally have the same width. This is not necessarily the case if the article support member is provided with a cutout. Another advantage of article support members having a cutout region is that the cutout region allows more of the pull tab to be remain exposed and accessible to the end user. This, in turn, provides more of the pull tab for a user to grasp during the stretch removal process.

In order to have the article support member and any exposed portion of the adhesive strip blend together inconspicuously, and thereby minimize the appearance of the pull tab portion, it is desirable to provide the article support member and any exposed portion of the adhesive strip, including the pull tab portion, with similar surface finishes (e.g. similar color, and similar surface texture). In this manner, the article support member and the exposed portion of the adhesive strip will present a consistent appearance. In certain end use applications, it may be desirable to minimize the appearance of both the article support member and the exposed portion of the adhesive strip. This may be accomplished, for example, by using article support members and adhesive strips that are clear or transparent.

## Claims

1. An article support assembly, comprising:
(a) a stretch releasable adhesive strip (6) having an adhesive portion (6a) and a non-adhesive pull tab portion (6b); and
(b) a unitary article support member (4) arranged over at least a portion of the adhesive portion (6a) of the stretch releasable adhesive strip, the article support member including a back plate portion (4a) and an article support Portion (4b);
wherein the non-adhesive pull tab portion (6b) of the stretch releasable adhesive strip and the back plate portion (4a) of the article support member combine to form a symmetric curved profile, and wherein the back plate portion (4a) includes a first end (1b) opposite the pull tab portion (6b) and a second end (18) adjacent the pull tab portion (6b), and further wherein the back plate portion first end (16) has a shape that generally corresponds to the shape of the pull tab portion (6b).

2. An article support assembly as defined in claim 1, wherein the profile of the article support assembly is oval.

3. An article support assembly as defined in claim 1, wherein the perimeter of the back plate portion includes an arcuate region adjacent the pull tab portion, and wherein the pull tab portion includes a curved region adjacent the arcuate region of the back plate, and further wherein the arcuate region of the back plate includes a tangent that matches the tangent of an adjacent tangent of the curved region of the pull tab portion.

4. An article support assembly as defined in claim 1, wherein the adjacent edges of the back plate portion and the pull tab are contiguous and aligned, and thereby form a smooth continuous curved profile.

5. An article support assembly, comprising:
(a) a unitary article support member (104, 204) including a back plate portion (104a, 204a) and an article support portion; and
(b) a stretch releasable adhesive strip (106, 206) having an adhesive portion and a non-adhesive pull tab portion (106b, 206b) wherein the non-adhesive pull tab portion (106b, 206b) is arranged to extend beyond the perimeter of the back portion (104a, 204a) and further wherein the non-adhesive pull tab portion (106b, 206b) has a size and shape to provide the article support assembly with a symmetric profile;
and wherein:
(i) the back plate portion (204a) has a first end (216) having a shape and a second end (218) having a shape that differs from the shape of the first end, wherein the shape of the pull tab portion (206b) generally corresponds to the shape of the back plate first end, and further wherein the second end of the back plate portion (204a) is tapered, and the pull tab portion (206b) is tapered; or
(ii) the back plate portion (104a) includes parallel side edges and an arcuate end (116) opposite the pull tab portion (106b), and further wherein the end of the pull tab portion (106b) has an arcuate shape that generally corresponds with the shape of the arcuate end (116) of the back plate portion (104a); or
(iii) the back plate portion (204a) includes parallel side edges and a triangular end (216) opposite the pull tab portion (206b), and further wherein the end of the pull tab portion (206b) has a triangular shape that generally corresponds with the shape of the triangular end (216) of the back plate portion (204a).

6. An article support assembly, comprising:
(a) a stretch releasable adhesive strip (406, 506) having an adhesive portion (406a) and a non-adhesive pull tab portion (406b, 506b) and
(b) a unitary article support member (404, 504) including a back plate portion (404a) and an article support portion (404b) arranged over the adhesive portion (406a) of the stretch releasable adhesive strip;
wherein the back plate portion (404a) includes a cutout region (424, 524), wherein the pull tab portion (406b, 506b) is arranged within the cutout region and fills in the cutout region, and wherein the pull tab portion of the stretch releasable adhesive strip (406, 506) and the back plate portion (404a) of the article support member combine to form a symmetric profile.

7. An article support assembly as defined in claim 1, wherein the article support member (4) and the pull tab portion (6b) are transparent.

## Patentansprüche

1. Artikelträgeranordnung, umfassend:
(a) einen durch Dehnung lösbaren Klebestreifen (6) mit einem klebenden Abschnitt und einem nicht klebenden Zuglaschenabschnitt (6b); und
(b) ein einstückiges Artikelträgerelement (4), das mindestens über einem Teil des klebenden Abschnitts (6a) des durch Dehnung lösbaren Klebestreifens angeordnet ist, wobei das Artikelträgerelement einen Rückwandabschnitt (4a) und einen Artikelträgerabschnitt (4b) beinhaltet;
wobei der nicht klebende Zuglaschenabschnitt (6b) des durch Dehnung ablösbaren Klebestreifens und der Rückwandabschnitt (4a) des Artikelträgerelements zusammen ein symmetrisches gekrümmtes Profil bilden, und wobei der Rückwandabschnitt (4a) ein dem Zuglaschenabschnitt (6b) gegenüberliegendes erstes Ende (1b) und ein dem Zuglaschenabschnitt (6b) benachbartes zweites Ende (18) beinhaltet, und ferner wobei das erste Ende (16) des Rückwandabschnitts eine Form aufweist, die im Allgemeinen der Form des Zuglaschenabschnitts (6b) entspricht.

2. Artikelträgeranordnung nach Anspruch 1, wobei das Profil der Artikelträgeranordnung oval ist.

3. Artikelträgeranordnung nach Anspruch 1, wobei der Außenumfang des Rückplattenabschnitts einen dem Zuglaschenabschnitt benachbarten bogenförmigen Bereich beinhaltet, und wobei der Zuglaschenabschnitt einen dem bogenförmigen Bereich der Rückplatte benachbarten gekrümmten Bereich beinhaltet, und ferner wobei der bogenförmige Bereich der Rückplatte eine Tangente beinhaltet, die mit der Tangente einer benachbarten Tangente des gekrümmten Bereichs des Zuglaschenabschnitts übereinstimmt.

4. Artikelträgeranordnung nach Anspruch 1, wobei die benachbarten Ränder des Rückplattenabschnitts und der Zuglasche fortlaufend und miteinander ausgerichtet sind und dadurch ein glattes, kontinuierliches gekrümmtes Profil bilden.

5. Artikelträgeranordnung, umfassend:
(a) ein einstückiges Artikelträgerelement (104, 204), das einen Rückwandabschnitt (104a, 204a) und einen Artikelträgerabschnitt beinhaltet; und
(b) einen durch Dehnung lösbaren Klebestreifen (106, 206) mit einem klebenden Abschnitt und einem nicht klebenden Zuglaschenabschnitt (106b, 206b), wobei der nicht klebende Zuglaschenabschnitt (106b, 206b) dazu ausgebildet ist, sich über den Außenumfang des Rückwandabschnitts (104a, 204a) hinaus zu erstrecken, und ferner wobei der nicht klebende Zuglaschenabschnitt (106b, 206b) solch eine Größe und Form aufweist, dass er der Artikelträgeranordnung ein symmetrisches Profil verleiht;
und wobei:
(i) der Rückwandabschnitt (204a) ein erstes Ende (216) mit einer Form und ein zweites Ende (218) mit einer der ersten Form des ersten Endes unterschiedlichen Form aufweist, wobei die Form des Zuglaschenabschnitts (206b) im Allgemeinen der Form ersten Endes des Rückwandabschnitts entspricht, und wobei das zweite Ende des Rückwandabschnitts (204a) spitz zulaufend ist, und der Zuglaschenabschnitt (206b) spitz zulaufend ist; oder
(ii) der Rückwandabschnitt (104a) parallele Seitenränder und ein dem Zuglaschenabschnitt (106b) gegenüberliegendes bogenförmiges Ende (116) beinhaltet, und ferner wobei das Ende des Zuglaschenabschnitts (106b) eine bogenförmige Form aufweist, die im Allgemeinen der Form des bogenförmigen Endes (116) des Rückwandabschnitts (104a) entspricht; oder
(iii) der Rückwandabschnitt (204a) parallele Seitenränder und ein dem Zuglaschenabschnitt (206b) gegenüberliegendes dreieckiges Ende (216) beinhaltet, und ferner wobei das Ende des Zuglaschenabschnitts (206b) eine dreieckige Form aufweist, die im Allgemeinen der Form des dreieckigen Endes (216) des Rückwandabschnitts (204a) entspricht.

6. Artikelträgeranordnung, umfassend:
(a) einen durch Dehnung lösbaren Klebestreifen (406, 506) mit einem klebenden Abschnitt (406a) und einem nicht klebenden Zuglaschenabschnitt (406b, 506b) und
(b) ein einstückiges Artikelträgerelement (404, 504), das einen Rückwandabschnitt (404a) und einen über dem klebenden Abschnitt (406a) des durch Dehnung ablösbaren Klebestreifens angeordneten Artikelträgerabschnitt (404b) beinhaltet;
wobei der Rückwandabschnitt (404a) einen ausgeschnittenen Bereich (424, 524) beinhaltet, wobei der Zuglaschenabschnitt (406b, 506b) innerhalb des ausgeschnittenen Bereichs angeordnet ist und den ausgeschnittenen Bereich ausfüllt, und wobei der Zuglaschenabschnitt des durch Dehnung ablösbaren Klebestreifens (406, 506) und der Rückwandabschnitt (404a) des Artikelträgerelement zusammen ein symmetrisches Profil bilden.

7. Artikelträgeranordnung nach Anspruch 1, wobei das Artikelträgerelement (4) und der Zuglaschenabschnitt (6b) transparent sind.

## Revendications

1. Ensemble support d'article, comprenant :
(a) une bande adhésive décollable par étirement (6) ayant une partie adhésive (6a) et une partie de languette à tirer non adhésive (6b) ; et
(b) un élément de support d'article unitaire (4) agencé sur au moins une partie de la partie adhésive (6a) de la bande adhésive décollable par étirement, l'élément de support d'article comprenant une partie de plaque de fond (4a) et une partie de support d'article (4b) ;
dans lequel la partie de languette à tirer non adhésive (6b) de la bande adhésive décollable par étirement et la partie de plaque de fond (4a) de l'élément de support d'article se combinent pour former un profil incurvé symétrique, et dans lequel la première de plaque de fond (4a) inclut une première extrémité (1b) opposée à la partie de languette à tirer (6b) et une seconde extrémité (18) adjacente à la partie de languette à tirer (6b) et dans lequel en outre la première extrémité de partie de plaque de fond (16) a une forme qui correspond généralement à la forme de la partie de languette à tirer (6b).

2. Ensemble support d'article selon la revendication 1, dans lequel le profil de l'ensemble support d'article est ovale.

3. Ensemble support d'article selon la revendication 1, dans lequel le périmètre de la partie de plaque de fond inclut une région arquée adjacente à la partie de languette à tirer, et dans lequel la partie de languette à tirer inclut une région incurvée adjacente à la région arquée de la plaque de fond, et dans lequel en outre la région arquée de la plaque de fond inclut une tangente qui correspond à la tangente adjacente d'une région incurvée de la partie de languette à tirer.

4. Ensemble support d'article selon la revendication 1, dans lequel les bords adjacents de la partie de plaque de fond et de la languette à tirer sont contigus et alignés, et forment ainsi un profil incurvé continu lisse.

5. Ensemble support d'article, comprenant :
(a) un élément support d'article unitaire (104, 204) incluant une partie de plaque de fond (104a, 204a) et une partie de support d'article ; et
(b) une bande adhésive décollable par étirement (106, 206) ayant une partie adhésive et une partie de languette à tirer non adhésive (106b, 206b), dans lequel la partie de languette à tirer non adhésive (106b, 206b) est agencée pour s'étendre au-delà du périmètre de la partie de fond (104a, 204a) et en outre dans lequel la partie de languette à tirer non adhésive (106b, 206b) a une taille et une forme pour fournir à l'ensemble support d'article un profil symétrique ;
et dans lequel :
(i) la partie de plaque de fond (204a) a une première extrémité (216) possédant une forme et une deuxième extrémité (218) ayant une forme qui diffère de la forme de la première extrémité, dans lequel la forme de la partie de languette à tirer (206b) correspond généralement à la forme de la première extrémité de plaque de fond, et en outre dans lequel la deuxième extrémité de la partie de la plaque de fond (204a) est effilée, et la partie de languette à tirer (206b) est effilée ; ou
(ii) la partie de fond (104a) inclut des bords latéraux parallèles et une extrémité arquée (116) opposée à la partie de la languette à tirer (106b), et dans lequel en outre l'extrémité de la partie de la languette à tirer (106b) a une forme arquée qui correspond généralement à la forme de l'extrémité arquée (116) de la partie de plaque de fond (104a) ; ou
(iii) la partie de plaque de fond (204a) inclut des bords latéraux parallèles et une extrémité triangulaire (216) opposée à la partie de languette à tirer (206b), et en outre dans lequel l'extrémité de la partie de languette à tirer (206b) a une forme triangulaire qui correspond généralement à la forme de l'extrémité triangulaire (216) de la partie de plaque de fond (204a).

6. Ensemble support d'article, comprenant :
(a) une bande adhésive décollable par étirement (406, 506) ayant une partie adhésive (406a) et une partie de languette à tirer non adhésive (406b, 506b) et
(b) un élément support d'article unitaire (404, 504) incluant une partie de plaque de fond (404a) et une partie de support d'article (404b) disposée sur la partie adhésive (406a) de la bande adhésive décollable par étirement ;
dans lequel la partie de plaque de fond (404a) inclut une région découpée (424, 524), dans lequel la partie de languette à tirer (406b, 506b) est disposée à l'intérieur de la région découpée et remplit la région découpée, et dans lequel la partie de languette à tirer de la bande adhésive décollable par étirement (406, 506) et la partie de plaque de fond (404a) de l'élément support d'article se combinent pour former un profil symétrique.

7. Ensemble support d'article selon la revendication 1, dans lequel l'élément support d'article (4) et la partie de languette à tirer (6b) sont transparents.
